(19) **Europäisches Patentamt**

**European Patent Office**

**Office européen des brevets**

(11) Publication number: **0 273 644 B1**

## EUROPEAN PATENT SPECIFICATION

(45) Date of publication of patent specification: **10.04.91** (51) Int. Cl.⁵: **G01G 19/387**

(21) Application number: **87311098.5**

(22) Date of filing: **16.12.87**

(54) **Combination weigher.**

| | |
|---|---|
| (30) Priority: **26.12.86 JP 203066/86** | (73) Proprietor: **YAMATO SCALE COMPANY, LIMITED**<br>**5-22, Saenba-cho**<br>**Akashi-shi Hyogo-ken(JP)** |
| (43) Date of publication of application:<br>**06.07.88 Bulletin 88/27** | |
| | (72) Inventor: **Mikata, Yoshitaka**<br>**319, Nishinakashima**<br>**Himeji-shi Hyogo-ken(JP)** |
| (45) Publication of the grant of the patent:<br>**10.04.91 Bulletin 91/15** | |
| (84) Designated Contracting States:<br>**DE FR GB** | (74) Representative: **Crawford, Andrew Birkby et al**<br>**A.A. THORNTON & CO. Northumberland**<br>**House 303-306 High Holborn**<br>**London WC1V 7LE(GB)** |
| (56) References cited:<br>**EP-A- 0 074 260**<br>**EP-A- 0 140 624**<br>**GB-A- 2 121 626** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to a combination weigher and, especially, to a combination weigher having auxiliary hoppers.

Various combination weighers can be found in the prior art. GB-A-2121626 discloses a weigher in which auxiliary hopper structures are disposed under weigh hoppers to receive articles discharged from the weigh hoppers and either hold the articles or direct them immediately into a collecting hopper, depending on the position of an internal gate.

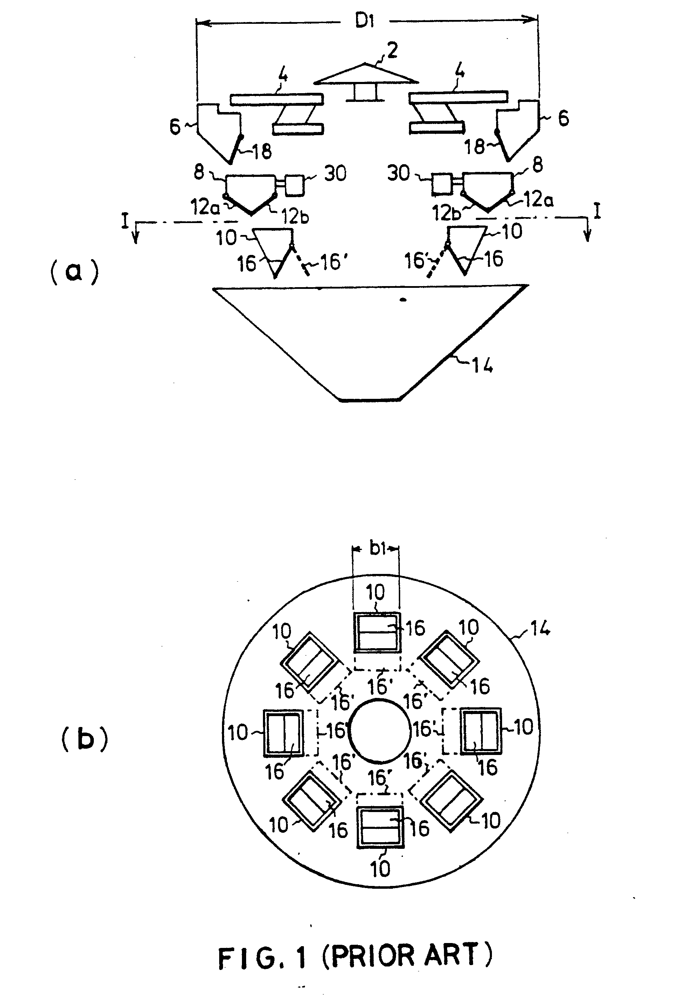

Figures 1(a) and 1(b) of the drawings accompanying the present specification show a specific arrangement of mechanical components of a prior art combination weigher, which is suggested, for example, in EP-A-0074260. In the drawings, a plurality of electromagnetic feeders 4 are radially arranged around a dispersion feeder 2 and a feed hopper 6 is disposed under the distal end of each electromagnetic feeder 4. A weigh hopper 8 is disposed under each feed hopper 6 and an auxiliary hopper 10 is disposed under each weigh hopper 8. The feed, weigh and auxiliary hoppers 6, 8 and 10 are respectively arranged annularly in concentric fashion. Each weigh hopper 8 has an outer gate 12a for discharging product directly downward and an inner gate 12b for feeding product into the underlying auxiliary hopper 10. Accordingly, the auxiliary hoppers 10 are arranged annularly under the inner gates 12b. A collection chute 14 is disposed under the auxiliary hoppers 10 for collecting product discharged from weigh hoppers 8 and/or auxiliary hoppers 10. Each auxiliary hopper 10 has a discharge gate 16 adapted to open inwardly as shown in phantom 16' and each feed hopper 6 also has a similar discharge gate 18.

However, the above-mentioned combination weigher having auxiliary hoppers 10 arranged annularly under the inner gates 12b of weigh hoppers 8 and each having the gate 16 opening inwardly has such a problem as follows.

When the auxiliary hoppers 10 are arranged annularly and their gates 16 having the same width bl as each hopper are opened inwardly as shown by 16', they must be positioned so that the lower edges of the opened gates 16' never enter a corresponding regular polygon having a side length bl, in order to ensure any hopper 10 to open its gate 16 without any interference of other gates. On the other hand, each auxiliary hopper 10 is disposed directly under the inner gate 10b of the corresponding weigh hopper 8 and, therefore, a funnel-like collection chute 14 must have a significantly large diameter sufficient for completely collecting the product discharge from the outer gates 12a of weigh hoppers 8. In the prior art combination weigher, such a bulky collection chute has resulted not only in an increased overall machine size and corresponding increase in the machine occupation area, but also in substantial difficulty in the maintenance service. While the gate width bl may be reduced to remove the above-mentioned problem, this will result in reduction in the flow rate of product which causes undesirable reduction in the machine efficiency. Although the flow rate can be maintained by increasing the height of gate, this will result in undesirable increase in the machine height.

Accordingly, an object of this invention is to provide an improved structure for a combination weigher which enables the collection chute diameter to be reduced for reducing the machine occupation area and increasing ease of maintenance service, without increase in the machine height and reduction in the machine efficiency.

In accordance with the invention there is provided a combination weigher comprising a plurality of weigh hoppers arranged in a circle, each said weigh hopper having an inner discharge gate and an outer discharge gate, a plurality of auxiliary hopper structures respectively disposed below said weigh hoppers and a common collection chute disposed below said auxiliary hopper structures, characterised in that each said auxiliary hopper structure includes a first chute for directing product discharged from said inner discharge gate of the weigh hopper to said collection chute, a second chute disposed below and constructed integrally with said first chute for directing the product discharged from said outer discharge gate of the weigh hopper to said collection chute, and a gate disposed in said second chute at a position intermediate the ends thereof to form an auxiliary hopper for temporarily storing the product.

A full understanding of the invention will be had from the following detailed description given with reference to the accompanying drawings, in which:-

Figure 1(a) is a schematic side view representing a mechanical configuration of a prior art combination weigher pertinent to this invention;

Figure 1(b) is a sectional plan view along a line I-I of Figure 1(a);

Figure 2(a) is a schematic side view representing, partly in section, an embodiment of this invention;

Figure 2(b) is a sectional plan view along a line II-II of Figure 2(a);

Figure 3(a) is a schematic side view representing, partly in section, another embodiment of this invention;

Figure 3(b) is a sectional plan view along line III-III of Figure 3(a); and

Figures 4(a), (b) and (c) are sectional side views representing three variations of the auxiliary hopper structure, those of Figures 4(b) and 4(c) being according to this invention.

Throughout the drawings, the same reference numerals are given to corresponding structural components.

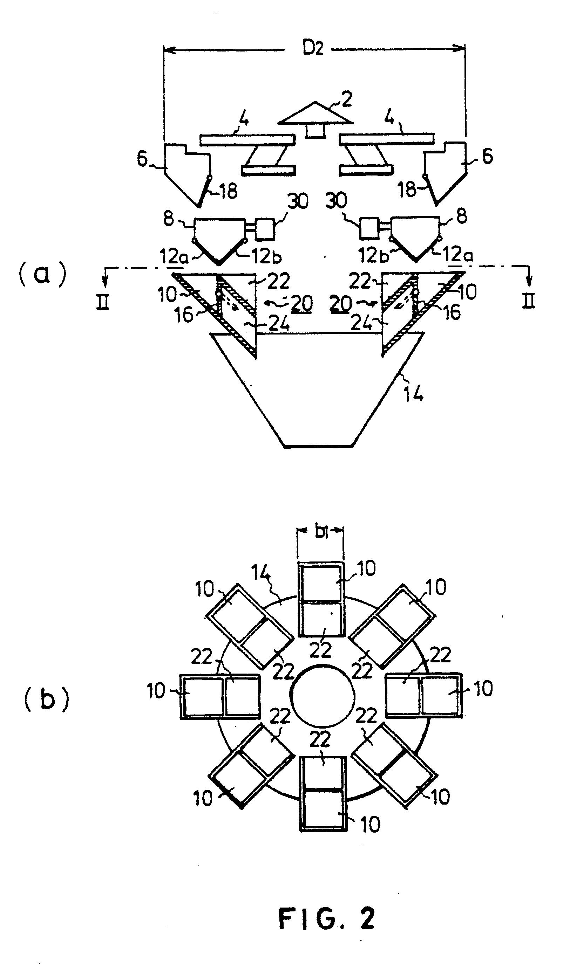

Referring to Figures 2(a) and (b) showing a first embodiment, a plurality of electromagnetic feeders 4 are arranged radially around a dispersion feeder 2 and a feed hopper 6 is disposed under the distal end of each electromagnetic feeder 4. Thus, the feed hoppers 6 are arranged annularly. Each feed hopper 6 has a discharge gate 18 for closing its bottom outlet. A weigh hopper 8 is disposed under each feed hopper 6 for receiving product therefrom when the gate 18 is opened. Thus, the weigh hoppers 8 are also arranged annularly. Each weigh hopper 8 is coupled to a load cell 30 for sensing the weight of product fed in the hopper 8. As in the aforementioned prior art device, each weight hopper 8 has two bottom outlets respectively directed to the outside and inside of the circle formed by the weigh hoppers 8 and these outlets are respectively closed by outer and inner discharge gates 12a and 12b. Under each weigh hopper 8, disposed is an auxiliary hopper structure 20 according to this invention.

Each auxiliary hopper structure 20 is formed as a discrete compact unit comprising a pair of triangular side plates and two slanting slide plates which form upper and lower chutes 22 and 24. The lower chute 24 is partitioned by a vertical gate door 16 to form an auxiliary hopper 10. A funnel-like collection chute 14 which may be much smaller than that of the prior art is disposed under the auxiliary hopper structures 20. Each auxiliary hopper structure is designed and positioned so that the content of the overhead weigh hopper 8 is fed to the auxiliary hopper 10 when the outer gate 12a opens, while it is discharged through the upper chute 22 into the collection chute 14 when the inner gate 12b opens. The content of the auxiliary hopper 10 is discharged through the lower chute 24 into the collection chute 14 when the gate 16 opens.

In operation, product to be weighed is fed through the feed hoppers 6 to the underlying weigh hoppers 8 and weighed by the associated load cells 30. The emptied feed hoppers 6 are reloaded by the electromagnetic feeders 4. The resultant weight indicative signals from the load cells 30 are digitized by A/D converters (not shown) and supplied to a control unit (not shown) composed of a microcomputer or the like. Then, the control unit acts to open the outer gates 12a of the corresponding weigh hoppers 8 to transfer the contents thereof to the corresponding auxiliary hoppers 10. Upon completion of this transfer, the control unit acts to open the discharge gates 18 of the corresponding feed hoppers 6 to reload the emptied weigh hoppers 8 and the sensors 30 provide the weight informations of the new product to the control unit. Thus, the control unit is now keeping the weights of product contained in all weigh and auxiliary hoppers 8 and 10. Then, the control unit produces various combinations of these weights and selects therefrom a combination having a total weight equal or close to a predetermined target weight. At the same time, the control unit drives the electromagnetic feeders 4 to reload the emptied feed hoppers 6 and then drives the dispersion feeder 2 to feed new product to the electromagnetic feeders 4. Upon completion of the combination selecting operation, the control unit acts to open the gates 12b and/or 16 of those weigh and/or auxiliary hoppers 8 and/or 10 which contain product batches whose weights form the selected combination. The contents of these hoppers are discharged through both upper and lower chutes 22 and 24 into the collection chute 14 for delivery. Upon completion of this discharge, the control unit acts to open the outer gate 12a of weigh hopper 8 corresponding to each emptied auxiliary hopper 10 and, also, the discharge gate 18 of feed hopper 6 corresponding to each emptied weigh hopper 8, to reload these emptied hoppers. If the corresponding weigh and auxiliary hoppers 8 and 10 have been emptied at the same time, the control unit acts to reload the weigh hopper only. The above-mentioned operation is repeated in succession.

It can be understood from comparison of Figures 1 and 2 that the outer diameter D2 of this embodiment is less than that of the prior art device D1 though the auxiliary hopper gates of the both have the same width b1. This is because the weigh hoppers 8 have been moved inward with respect to the original position of the auxiliary hoppers 10 though the size of polygon formed by the inner edges of the chute 24 is unchanged. Moreover, the collection chute 14 in this embodiment has been substantially reduced in size.

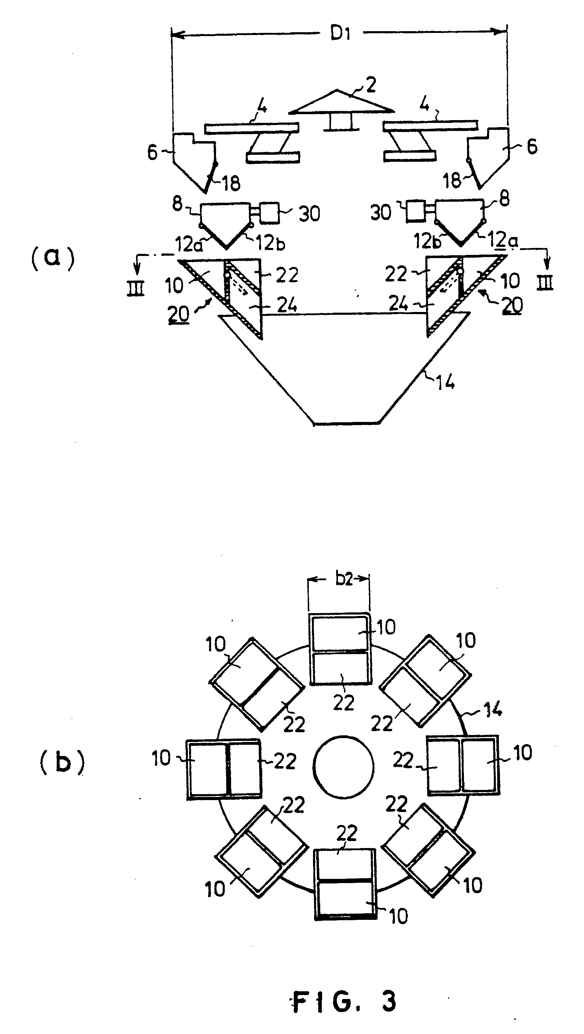

Figures 3(a) and (b) show a second embodiment of this invention. In this embodiment, the structure of the first embodiment is expanded horizontally as maintaining the outer diameter D1 of the prior art device. With this expansion, it becomes possible to increase the gate width from b1 to b2 thereby increasing the flow rate to improve the machine efficiency. This embodiment will not be described further since it is similar in both structure and operation to the above described first embodiment.

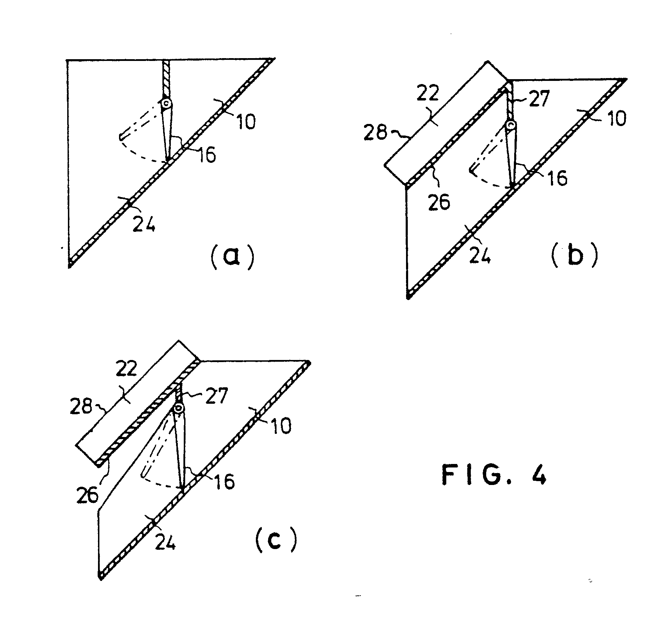

Figure 4(a) shows a variation of the auxiliary hopper structure 20 which is outside the scope of the invention, in which the upper chute 22 of Figures 2 and 3 is removed and the lower chute 24 is used in common for the product discharged from weigh and auxiliary hoppers 8 and 10. Figure 4(b) shows another variation of the auxiliary hopper structure 20 in which the slide plate 26 of the upper chute 22 is formed integral with the partition plate 27 of the auxiliary hopper 10 and a pair of guide walls 28 are attached thereto to form the upper chute 22. Figure 4(c) shows a further variation in which the slide plate 26 of the upper chute 22 covers a part of the auxiliary hopper 10 and also has a pair of guide walls 28.

The above description has been made only for the purpose of illustration but not for limitation. Various modifications and variations can be made within the scope of this invention. For example, the inner and outer gates may be attached to a single bottom outlet of each weigh hopper, instead of two separate outlets.

As described above, with the structure according to this invention, it becomes possible to reduce the overall diameter of the machine, thereby reducing its occupation area. Moreover, the improved auxiliary hopper structure contributes to substantial reduction in size of the collection chute and this reduced size of collection chute and the compact structure of the auxiliary hopper structure contribute also to easy detachment and handling thereof by a sole operator, thereby facilitating his cleaning operation and like operations for maintenance service.

## Claims

1. A combination weigher comprising a plurality of weigh hoppers (8) arranged in a circle, each said weigh hopper having an inner discharge gate (12b) adapted to discharge product inside of said circle and an outer discharge gate (12a) adapted to discharge product outside of said circle, a plurality of auxiliary hopper structures (20) respectively disposed below said weigh hoppers (8) and a common collection chute (14) disposed below said auxiliary hopper structures (20), characterised in that each said auxiliary hopper structure (20) includes a first chute (22) for directing product discharged from said inner discharge gate (12b) of the weigh hopper (8) towards the center of said collection chute 14, a second chute (24) disposed below and constructed integrally with said first chute (22) for directing the product discharged from said outer discharge gate (12a) of the weigh hopper (8) to said collection chute (14), and a gate (16) disposed in said second chute (24) at a position intermediate the ends thereof to form an auxiliary hopper (10) for temporarily storing the product.

2. A combination weigher according to claim 1, wherein the first and second chutes (22, 24) have common side walls.

## Revendications

1. Machine de pesage par combinaison, comprenant plusieurs trémies de pesage (8) placées en cercle, chaque trémie de pesage ayant une porte interne (12b) d'évacuation destinée à évacuer le produit à l'intérieur du cercle et une porte externe (12a) d'évacuation destinée à évacuer le produit à l'extérieur du cercle, plusieurs structures (20) de trémie auxiliaire disposées sous les trémies de pesage (8), et une goulotte collectrice commune (14) placée sous les structures (20) de trémie auxiliaire, caractérisée en ce que chaque structure (20) de trémie auxiliaire comporte une première goulotte (22) destinée à diriger le produit évacué par la porte interne d'évacuation (12b) de la trémie de pesage (8) vers le centre de la goulotte collectrice (14), une seconde goulotte (24) disposée au-dessous de la première goulotte (22), dont elle est solidaire par construction, et destinée à diriger le produit évacué par la porte externe (12a) d'évacuation de la trémie de pesage (8) vers la goulotte collectrice (14), et une porte (16) placée dans la seconde goulotte (24) en position comprise entre les extrémités de celle-ci afin qu'une trémie auxiliaire (10) destinée à conserver temporairement le produit soit formée.

2. Machine de pesage par combinaison selon la revendication 1, dans laquelle la première et la seconde goulotte (22, 24) ont des parois latérales communes.

## Ansprüche

1. Kombinatorische Waage, enthaltend mehrere Wägeschütten (8), die auf einem Kreis angeordnet sind, wobei jede Wägeschütte eine innere Abgabeklappe (l2b) aufweist, die dazu eingerichtet ist, Inhalt nach innerhalb des Kreises abzugehen, und eine äußere Auslaßklappe (12a) hat, die dazu eingerichtet ist, Inhalt nach außerhalb des Kreises abzugehen, mit mehreren Hilfsschüttenanordnungen (20), die jeweils unterhalb der Wägeschütten (8) angeordnet sind, und einem gemeinsamen Sammeltrichter (14), der unter den Hifsschüttenanordnungen (20) angeordnet ist, **dadurch gekennzeichnet, daß** jede Hilfsschüttenanordnung (20) eine erste Rutsche (22) zum Zuleiten von der inneren Auslaßklappe (12b) der Wägeschütte (8) abgegebenen Inhalts zur Mitte des Sammeltrichters (14), eine zweite Rutsche (24), der unterhalb und integral mit der ersten Rutsche (22) ausgebildet ist, um von der äußeren Auslaßklappe (12a) der Wägeschütte (8) abgebenen Inhalts zu dem Sammeltrichter (14) zu leiten, und eine Klappe (16) aufweist, die in der zweiten Rutsche (24) an einer Stelle zwischen den Enden derselben angeordnet ist, um eine Hilfsschütte (10) zur Zwischenspeicherung des Inhalts zu bilden.

2. Kombinatorische Waage nach Anspruch 1, bei der die ersten und zweiten Rutschen (22,24) gemeinsame Seitenwände haben.

( a )

( b )

FIG. 1 (PRIOR ART)

F I G. 2

(a)

(b)

**FIG. 3**

( a )

( b )

( c )

FIG. 4